(19) Europäisches Patentamt
European Patent Office
Office européen des brevets

(11) Publication number: **0 419 654 A1**

(12) **EUROPEAN PATENT APPLICATION published in accordance with Art. 158(3) EPC**

(21) Application number: **88902553.2**

(51) Int. Cl.5: **C08F 220/60**, C08F 220/56

(22) Date of filing: **15.03.88**

(86) International application number: **PCT/JP88/00269**

(87) International publication number: **WO 88/07559 (06.10.88 88/22)**

(30) Priority: **23.03.87 JP 65720/87**

(43) Date of publication of application: **03.04.91 Bulletin 91/14**

(84) Designated Contracting States: **BE CH DE FR GB IT LI**

(71) Applicant: **KOHJIN CO. Ltd.**
**1-1, Shinbashi 1 chome**
**Minato-ku Tokyo 105(JP)**

(72) Inventor: **MUKOUYAMA, Hideaki**
**5595, Uyanagimotomachi**
**Yatsushiro City, Kumamoto 866(JP)**
Inventor: **USHIDA, Seiji**
**1226-2, Yokotemachi**
**Yatsushiro City Kumamoto 866(JP)**
Inventor: **HARADA, Kazuya**
**5-26, Fukusho Motomachi**
**Yatsushiro City Kumamoto 866(JP)**

(74) Representative: **Türk, Gille, Hrabal**
**Brucknerstrasse 20**
**W-4000 Düsseldorf 13(DE)**

# (54) WATER-SOLUBLE CATIONIC POLYMER.

(57) A process for producing a water-soluble cationic polymer having a high molecular weight and containing a reduced amount of water-insoluble gel. and a polymer obtained by this process are disclosed. The process comprises polymerizing or copolymerizing at least one member selected from the group consisting of vinyl monomers represented by general formula (1), neutralized salt monomers represented by general formula (2), and quaternary ammonium salt monomers represented by general formula (3) and containing 100 ppm of a divinyl monomer represented by general formula (5), with a vinyl monomer represented by general formula (4) in a molar ratio of 100 : 0 to 5 : 95. In formula (1), $R_1$ represents hydrogen or methyl, and $R_2$ and $R_3$ each represents 1 ~ 3C alkyl: in formula (2), $R_1$, $R_2$, and $R_3$ are as defined above, and X represents an anionic counter ion: in formula (3), $R_1$, $R_2$, $R_3$, and X are as defined above in (2), and $R_4$ represents 1 ~ 4C alkyl or benzyl: in formula (4), $R_1$ represents hydrogen or methyl and in formula (5), $R_1$ represents hydroggen or methyl. The resulting polymer serves as an excellent flocculating agent.

EP 0 419 654 A1

(1)

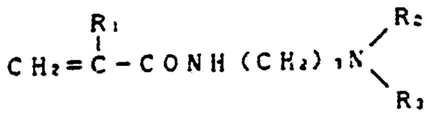

(2)

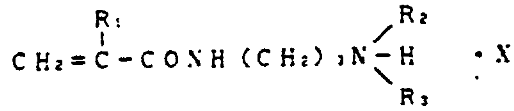

(3)

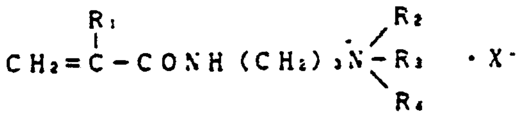

(4)

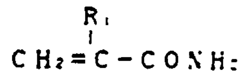

(5)

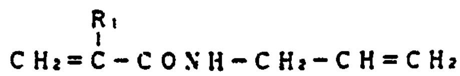

# CATIONIC POLYMER HAVING A GOOD WATER-SOLUBILITY

## TECHNICAL FIELD

The present invention relates to a cationic polymer having a high molecular weight with an excellent water-solubility. More particularly, the present invention relates to a cationic polymer having a high molecular weight and an excellent water-solubility, which is prepared by polymerizing only one monomer of dialkylaminopropyl-(meth)acrylamide, its neutralized salt and its quarternary ammonium salt, as a recurring unit constituting the polymer, or by copolymerizing the foregoing monomer with (meth)acrylamide.

## BACKGROUND ART

In recent years, there have been employed various cationic polymers as paints, paper processing agents, flocculants, and the like. Particularly in the field of flocculants, there is an increased necessity of such polymers for a treatment of water contaminated with organic substances or colored waste water, such as municipal sewage.

Various cationic polymer flocculants are used for these purposes. However, any sufficiently satisfied flocculant has not yet been provided. For instance, even if a suspended solid can be flocculated, the resulting cake is poor in dehydration property or filterability. Thus there has been desired a development of a cationic flocculant having a high performance for a more economical and efficient treatment.

As the cationic flocculant for such uses, there have been proposed a cationic modified polyacrylamide, and a copolymer of acrylamide with N,N-dialkylaminoethyl (meth)acrylate or its quaternary ammonium salt (see Japanese Examined Patent Publication No. 51-17142 and Japanese Examined Patent Publication No. 53-22938); and a polymer of N,N-dialkylaminoalkyl-(meth)acrylamide, or its quaternary ammonium salt or neutralized salt (see Japanese Unexamined Patent Publication No. 59-24708 and Japanese Unexamined Patent Publication No. 59-26106).

However, since the above-mentioned cationic modified polyacrylamide is prepared by a modification method employing a polymer reaction, it is obliged to use polyacrylamide having a low molecular weight as a raw material in order to obtain a modified polymer having a high degree of cationization. However, for the purpose of obtaining a cationic polymer flocculant having a high performance, it is necessary to use a polymer having a high molecular weight. From this point of view, conventional cationic modified polymers are insufficient. The copolymer of acrylamide with N,N-dialkylaminoethyl (meth)acrylate or its quaternary ammonium salt has another defect that the acrylate as a starting monomer is easily hydrolyzed to by-produce a substance having carboxyl group which is an anionic group, during an aqueous solution polymerization, which results in formation of a polymer having a lower degree of cationization. When N,N-dialkylaminoalkyl-(meth)acrylamide, or its quaternary ammonium salt or neutralized salt, which is developed as a monomer being prevented from the above-mentioned hydrolysis, is used for producing a polymer having a high average molecular weight of not less than $10^6$ and having a high degree of cationization, a desired polymer having a high molecular weight and a high degree of cationization cannot be obtained due to formation of a water-insoluble gel-like material, the composition of which is indeterminable.

## DISCLOSURE OF THE INVENTION

Extensive researches have been made in order to solve the above-mentioned problems and to obtain a cationic polymer having a high molecular weight and a high degree of cationization and as a result, it has been found that the above-mentioned water-insoluble gel-like material is derived from a divinyl monomer contained in the cationic monomer used for the polymerization, and the present invention has been accomplished on the basis of the finding.

The present invention provides a cationic polymer having a good water-solubility which has an average molecular weight of not less than $10^6$ and wherein the content of water-insoluble gel is not more than 50 g/g, said polymer being obtained by polymerizing or copolymerizing one or more monomers selected from the group consisting of a vinyl monomer represented by the general formula (1), a neutralized salt monomer represented by the general formula (2) and a quaternary ammonium salt monomer represented by the general formula (3); and a vinyl monomer represented by the general formula (4), in a ratio of the monomer (1), (2) or (3) to the monomer (4) of 100 : 0 to 5 : 95 by mole.

(1)

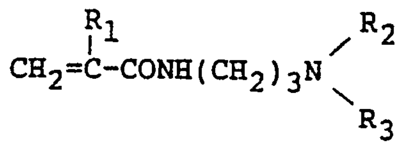

wherein $R_1$ represents hydrogen atom or methyl group, and $R_2$ and $R_3$ represent alkyl group having 1 to 3 carbon atoms.

(2)

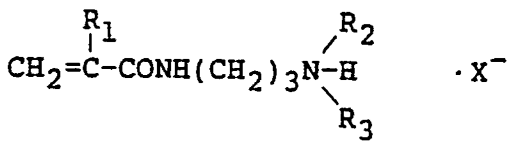

wherein $R_1$, $R_2$ and $R_3$ are the same as defined in the above (1), and X represents anionic counter ion.

(3)

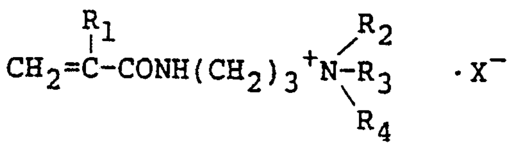

wherein $R_1$, $R_2$, $R_3$ and X are the same as defined in the above (2), and $R_4$ represents alkyl group having 1 to 4 carbon atoms or benzyl group.

(4)

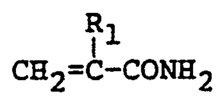

wherein $R_1$ represents hydrogen atom or methyl group.

The average molecular weight M of the polymer is obtained as a value calculated, according to the following formula, from the intrinsic viscosity $[\eta]$ which is determined at 30 °C by means of an Ostwald viscometer, using solutions prepared by dissolving the polymer into 1N sodium nitrate aqueous solution. $M = 1.4 \times 10^5 \times [\eta]^{3/2}$

The content of the water-soluble gel is represented in terms of the weight (g) of the gel per 1 g of the dry polymer, which weight is determined on the basis of the weight of a residue obtained by filtering, by means of a 200 mesh screen, a solution prepared by dissolving 1 g of an absolutely dried polymer into 1,000 mℓ of water.

The process for preparing the polymer of the present invention is explained below.

In order to prepare a desired cationic polymer of the present invention having an average molecular weight of not less than $10^6$ and a content of water-insoluble gel of not more than 50 g/g dry polymer by using the monomers represented by the above-mentioned general formulas (1) to (4), it is necessary that the content of the divinyl monomer represented by the general formula (5) contained in one or more kinds of monomers to be used for polymerization is not more than 100 ppm, preferably not more than 20 ppm.

(5)

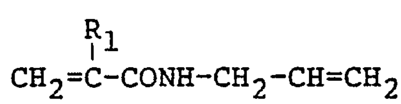

wherein $R^1$ represents hydrogen atom or methyl group.

When a monomer containing the divinyl monomer in an amount of more than 100 ppm is used, a polymer containing the above-mentioned water-insoluble gel-like material in an amount of more than 50 g/g, which is poor in practical use, is obtained. In order to make the polymer into a practical product, it is necessary to further purify it by means of solvent extraction, or the like, which results in an economical disadvantage.

The above-mentioned monomers represented by the general formulas (1) to (4) wherein the content of the divinyl monomer is not more than 100 ppm can be obtained by refining each crude monomer under a reduced pressure in nitrogen gas atmosphere to remove the divinyl monomer.

Examples of the vinyl monomer represented by the general formula (1) used for preparing the cationic polymer of the present invention are, for instance, N,N-dimethylaminopropylacrylamide, N,N-diethylaminopropylacrylamide, N,N-dipropylaminopropylacrylamide, and the corresponding methacrylic derivatives thereof. Since these vinyl monomers have a tendency that the monomers easily form the divinyl monomer represented by the general formula (5) in the presence of air, it is desirable that the vinyl monomers are polymerized immediately after preparation of monomers containing the divinyl monomer in an amount of not more than 100 ppm. When these vinyl monomers are stored, an appropriate treatment such as shutting off from air, especially oxygen, is required.

Since the neutralized salt (general formula (2)) and the quaternary ammonium salt (general formula (3)) of the foregoing vinyl monomers produce the divinyl monomer only in a slight amount during storage, it is preferable to use the neutralized salt or the quaternary ammonium salt so long as the properties of a polymer obtained therefrom are acceptable.

The neutralized salt monomer represented by the general formula (2) used in the present invention can be prepared by reacting the above-mentioned vinyl monomer represented by the general formula (1) with various mineral acids or organic acids, for instance, hydrochloric acid, sulfuric acid, phosphoric acid, acetic acid and p-toluenesulfonic acid, by means of conventional methods, for instance, the methods disclosed in Japanese Examined Patent Publication No. 58-15942 and Japanese Examined Patent Publication No. 58-67651.

The quarternary ammonium salt represented by the general formula (3) used in the present invention can be prepared by reacting the vinyl monomer represented by the general formula (1) with a conventional agent for forming quaternary salt, such as alkyl halide, aralkyl halide and dialkyl sulfate. Among them, methyl chloride, ethyl chloride, propyl chloride and benzyl chloride are more preferable. More concretely, for instance, the method described in Japanese Unexamined Patent Publication No. 59-24708 can be utilized to prepare the quaternary salts.

As for the method for obtaining the cationic polymer of the present invention, usual methods utilized for polymerization of such kinds of water-soluble vinyl monomers can be adopted.

As for the polymerization initiator, peroxides such as ammonium persulfate, potassium persulfate and benzoyl peroxide; azo compounds such as azobisisobutyronitrile and 2,2'-azobis(2-amidinopropane) dihydrochloride; redox catalysts, and the like, can be used. Especially, in order to obtain a polymer having a higher molecular weight, it is advantageous to use a redox catalyst.

Examples of the oxidizing agent as a component of the redox catalyst are, for instance, hydrogen peroxide; persulfates such as ammonium persulfate, potassium persulfate and sodium persulfate; bromates such as potassium bromate and sodium bromate; perborates such as potassium perborate, sodium perborate and ammonium perborate; percarbonates such as potassium percarbonate, sodium percarbonate and ammonium percarbonate; and perphosphates such as potassium perphosphate, sodium perphosphate and ammonium perphosphate.

On the other hand, examples of the reducing agent are, for instance, ferrous salts such as ferrous sulfate and ferrous chloride; water-soluble inorganic reducing agents such as potassium bisulfite, sodium bisulfite, potassium metabisulfite, sodium metabisulfite, potassium thiosulfate, sodium thiosulfate and sodium nitrite; and water-soluble tertiary amines such as triethanolamine, triethylamine, trimethylamine, dimethylaminomethyl methacrylate, dimethylaminoethyl acrylate and tetramethylethylenediamine.

These polymerization initiators are usually used in an amount within the range of about 0.001 to 0.5 % by weight per total amount of the monomer.

The initiation temperature of polymerization varies depending on the kind of the initiator used. Usually a temperature of 0° to 100° C, more preferably 10° to 50° C, is adopted. As for the method for polymerization, usual methods such as aqueous solution polymerization, reversed phase emulsion polymerization and bulk polymerization can be adopted, and the method for polymerization is not limited to any particular one.

It is preferable that the concentration of dissolved oxygen in the polymerization system is reduced as much as possible not only from the viewpoint that the presence of oxygen inhibits a smooth progress of the polymerization, but also from the viewpoint of inhibiting gelation due to by-production of the divinyl monomer represented by the general formula (5) during polymerization reaction. More particularly, it is preferable to reduce the concentration of oxygen to not more than 0.5 ppm, more preferably not more than 0.1 ppm, by displacing the atmosphere of the polymerization system with inert gas such as nitrogen gas.

## INDUSTRIAL APPLICABILITY

In accordance with the present invention, a monomer wherein the content of the divinyl monomer is not

more than 100 ppm is used as the starting material in the preparation of a cationic polymer having a high molecular weight, thereby yielding a cationic polymer having a high degree of cationization, an excellent water-solubility and a high molecular weight and wherein the amount of a water-insoluble gel-like material is suppressed. Accordingly, a cationic flocculant which provides excellent dehydration property, filterability and efficiency from economical aspect can be obtained.

## EXAMPLES

The present invention is more specifically explained by means of the following Examples. However, the present invention is not limited to the Examples and includes other examples unless they are beyond the gist of the present invention. Hereinafter, part, percent and ppm are represented by weight basis unless otherwise noted.

The measurements in Examples are determined by the following methods.

-Degree of polymerization and content of water-insoluble gel-

The obtained polymer was a rubber-like elastomer. The degree of polymerization was determined by means of an iodometry method to obtain a purity of the polymer. A sample of the rubber-like elastomer, the amount of which was equivalent to 1 g of a dry polymer, was taken and the sample was dissolved into 1,000 mℓ of water at a room temperature over a night. The gel in the obtained solution was filtered off by means of 200 mesh screen and the free water of the gel was sufficiently wiped away. Then the gel was weighed to determine the weight of the water-insoluble gel.

-Average molecular weight of the polymer-

The intrinsic viscosity $[\eta]$ of the obtained polymer was determined at 30° C by means of an Ostwald viscometer, using solutions prepared by dissolving the polymer into 1N sodium nitrate aqueous solution. The average molecular weight (Mw) of the polymer was calculated according to the following formula:

$$M = 1.4 \times 10^5 \times [\eta]^{3/2}$$

### Example 1

1. Preparation of polymer

N,N-dimethylaminopropylacrylamide was rectified under a reduced pressure in nitrogen gas atmosphere to completely remove a divinyl monomer (N-allylacrylamide). Immediately thereafter, it was subjected to the following polymerization. The analysis of N-allylacrylamide was carried out by means of gas chromatography.

The obtained N,N-dimethylaminopropylacrylamide was mixed with a commercially available acrylamide in a ratio of 20 : 80 by mole to give an aqueous solution containing 15% of the mixed monomer. One hundred and fifty parts of the solution was put into a beaker and adjusted to pH 3.0 with sulfuric acid. The solution was placed in an insulated and closed glass polymerization vessel equipped with a stirrer, a therometer and a conduit for nitrogen gas. The vessel was immersed in a water bath thermostated at 20° C and nitrogen gas of a high purity was introduced into the vessel until the concentration of dissolved oxygen in the system became 0.1 ppm.

Then 50 ppm (per monomer) of ammonium persulfate and 50 ppm (per monomer) of sodium bisulfite were added to the mixture, and nitrogen gas of a high purity was further introduced for five minutes with stirring. 2,2'-Azobis-(2-amidinopropane) dihydrochloride was added in an amount of 100 ppm to the mixture and further nitrogen gas of a high purity was introduced for one minute with stirring. The polymerization reaction was initiated within 10 to 20 minutes after the addition of the whole amount of initiators. The system showed exothermic change and an increase in viscosity. After the stirring could not be continued, the polymerization was carried out without stirring, and the reaction was completed 3 hours after the initiation of the polymerization to give a polymer.

With respect to the obtained copolymer, the degree of polymerization, the average molecular weight (Mw) and the content of insoluble gel were determined. The results were as follows: The degree of polymerization was 99.2 %, the average molecular weight was $2.59 \times 10^6$ and any water-insoluble gel could not be observed.

Example 2

The same procedures as in Example 1 were repeated except that N,N-dimethylaminopropylacrylamide which was purified in the same manner as in Example 1, sealed in the presence of air in a container and stored at a room temperature for 2 days, thereby increasing the content of the divinyl monomer from 0 ppm to 2 ppm, was used to give a rubber-like elastomer.

With respect to the obtained copolymer, the degree of polymerization, the average molecular weight (Mw) and the content of water-insoluble gel were determined. The results were as follows: The degree of polymerization was 99.3 %, the average molecular weight was 2.32 x $10^6$ and the content of water-insoluble gel was 12 g/g.

Comparative Example 1

The same procedures as in Example 1 were repeated except that N,N-dimethylaminopropylacrylamide which was purified in the same manner as in Example 1, sealed in the presence of air in a container and stored at 20 °C for 20 days, thereby increasing the content of the divinyl monomer from 0 ppm to 120 ppm, was used to give a rubber-like elastomer. The elastomer formed a water-containing massive gel in water. The degree of polymerization and the average molecular weight could not be measured. The content of water-insoluble gel was 450 g/g.

Comparative Example 2

The same procedures as in Comparative Example 1 were repeated except that each initiator was used in an amount of 100 times that used in Comparative Example 1 to give a rubber-like elastomer.

With respect to the obtained copolymer, the degree of polymerization, the average molecular weight (Mw) and the content of insoluble gel were determined. The results were as follows: The degree of polymerization was 99.7 %, the content of water-insoluble gel was 38 g/g which showed that the polymer was comparatively good in water-solubility, but the average molecular weight was only 1.06 x $10^5$. That is, the content of water-insoluble gel could be decreased, but the average molecular weight became lower. The obtained copolymer was unsatisfactory as a flocculant.

Example 3

N,N-dimethylaminopropylmethacrylamide which was rectified under a reduced pressure in nitrogen gas atmosphere to remove completely the divinyl monomer (N-allylmethacrylamide) was used instead of N,N-dimethylaminoprolylacrylamide used in Example 1. The polymerization was carried out under the same conditions as in Example 1 to give a rubber-like elastomer.

With respect to the obtained elastomer, the degree of polymerization, the average molecular weight (Mw) and the content of water-insoluble gel were determined. The results were as follows: The degree of polymerization was 98.8 %, the average molecular weight was 1.76 x $10^6$ and any water-insoluble gel could not be observed.

Comparative Example 3

The same procedures as in Example 1 were repeated except that the N,N-dimethylaminopropylmethacrylamide which was purified in the same manner as in Example 3, sealed in the presence of air in a container and stored at 30 °C for 30 days, thereby increasing the content of the divinyl monomer (N-allylmethacrylamide) from 0 ppm to 114 ppm, was used to give a rubber-like elastomer. The elastomer formed a massive gel when it was dissolved in water. Accordingly, the degree of polymerization and the average molecular weight could not be determined. The content of water-insoluble gel was 430 g/g.

Examples 4 to 6

A 1 liter autoclave was charged with 360 parts of N,N-dimethylaminopropylacrylamide which was rectified in the same manner as in Example 1 (the divinyl monomer was not detected), 100 parts of acetone and 1 part of hydroquinone monomethyl ether. After the mixture was cooled to a temperature of not more than 20 °C, 119 parts of water was added to the mixture. After the addition of water, nitrogen gas was introduced into the reaction system to displace oxygen till the concentration of the dissolved oxygen in the system became 0.4 ppm. Methyl chloride was introduced under a pressure of 1.4 to 1.5 $kg/cm^2$ from a bomb to initiate the reaction. The reaction of forming a quaternary salt was carried out at a temperature of not more than 40 °C for 20 hours. After the reaction mixture was separated into two layers, the acetone layer of 32 parts was removed, and the solution layer containing 3-acrylamidopropyltrimethylammonium chloride was treated under a reduced pressure at 20 ° to 30 °C to remove the contained acetone, yielding 586 parts of an aqueous solution containing 3-acrylamidopropyltrimethylammonium chloride. The concentration of the quaternary ammonium salt in the product was 78.8 %, and the divinyl monomer (N-allylacrylamide) was not detected.

The thus obtained 3-acrylamidopropyltrimethyl-ammonium chloride was mixed with acrylamide in each ratio of 10/90, 30/70 or 80/20 by mole (corresponding to Examples 4, 5 and 6, respectively) to give an aqueous soluticn containing 15% of the mixed monomer. Each solution was subjected to polymerization under the same conditions as in Example 1 to give a polymer.

With respect to each of the obtained polymers, the degree of polymerization, the average molecular weight (Mw) and the content of water-insoluble gel were determined. The results were as fcllows. All the polymers had average molecular weights of not less than $10^6$ and good water-solubilities and did not contain any water-insoluble gel.

Example 4: Degree of polymerization: 99.5 % Average molecular weight: 3.23 x $10^6$ No water-insoluble gel was observed.

Example 5: Degree of polymerization: 99.3 % Average molecular weight: 2.25 x $10^6$ No water-insoluble gel was observed.

Example 6: Degree of polymerization: 98.9 % Average molecular weight: 1.32 x $10^6$ No water-insoluble gel was observed.

Comparative Examples 4 to 6

The same procedures as in Examples 4 to 6 were repeated except that N,N-dimethylaminopropylacrylamide containing 205 ppm of the divinyl monomer (N-allylacrylamide) was used instead of the N,N-dimethylaminopropylacrylamide in Examples 4 to 6 to give an aqueous solution of 3-acrylamidopropyltrimethylammonium chloride. The concentration of the quaternary ammonium salt in the product was 78.7 %, and the content of the divinyl monomer (N-allylacrylamide) was 105 ppm.

The thus obtained 3-acrylamidopropyltrimethyl-ammonium chloride was mixed with acrylamide in each ratio of 10/90, 30/70 or 80/20 by mole (corresponding to Comparative Examples 4, 5 and 6, respectively) to give an aqueous solution containing 15 % of the mixed monomer. Each solution was subjected to polymerization under the same conditions as in Examples 4 to 6.

With respect to each of the obtained polymers, the degree of polymerization, the average molecular weight (Mw) and the content of water-insoluble gel were determined. The degree of polymerization, the average molecular weight and the content of water-insoluble gel were as follows. All the polymers had poor water-solubilities.

Comparative Example 4:

Degree of polymerization: 99.3 %
Average molecular weight: 2.52 x $10^6$
Content of water-insoluble gel: 82 g/g

Comparative Example 5:

The degree of polymerisation and the average molecular weight could not be measured due to formation of a massive gel when the polymer was dissolved in water.
Content of water-insoluble gel: 240 g/g

Comparative Example 6:

The degree of polymerization and the average molecular weight could not be measured due to formation of a massive gel when the polymer was dissolved in water.

Examples 7 and 8

A three necked flask equipped with a stirrer, a thermometer and a dropping funnel was charged with 1,000 parts of N,N-dimethylaminopropylacrylamide which was rectified in the same manner as in Example 1 (the divinyl monomer was not detected). 652.1 parts of 49.62 % sulfuric acid aqueous solution containing 0.5 part of oxalic acid as a polymerization inhibitor was added dropwise into the flask over 1.5 hours while being cooled with ice so that the inner temperature was not more than 30 °C to give an aqueous solution of N,N-dimethylamino propylacrylamide sulfate. The concentration of dissolved oxygen in the product was 1.2 ppm and the divinyl monomer was not detected.

The thus obtained N,N-dimethylaminopropylacrylamide sulfate was mixed with acrylamide in each ratio of 25/75 or 100/0 by mole (corresponding to Examples 7 and 8, respectively) to give an aqueous solution containing 15 % of the mixed monomer. Each solution was subjected to polymerization under the same reaction conditions as in Example 1 to give a polymer.

With respect to each of the obtained polymers, the degree of polymerization, the average molecular weight and the content of water-insoluble gel were determined. The results were as follows. Both polymers had average molecular weights of not less than $10^6$ and good water solubilities and did not contain any water-insoluble gel.

Example 7: Degree of polymerization: 99.1 % Average molecular weight: 2.48 x $10^6$ Content of water-insoluble gel: 1.2 g/g

Example 8: Degree of polymerization: 98.8 % Average molecular weight: 1.02 x $10^6$ No water-insoluble gel was observed.

Comparative Examples 7 and 8

The same procedures as in Examples 7 and 8, respectively, were repeated except that N,N-dimethylaminopropylacrylamide containing 190 ppm of the divinyl monomer (N-allylacrylamide) was used instead of the N,N-dimethylaminopropylacrylamide used in Examples 7 and 8, to give polymers. Each of the obtained polymers formed a massive gel when the polymer was dissolved in water. Accordingly, the degree of polymerization and the average molecular weight of the polymer could not be determined. The contents of water-insoluble gel of the polymers were 420 g/g and 387 g/g, respectively.

The content of the divinyl monomer in the N,N-dimethylaminopropylacrylamide sulfate which was obtained by reaction with sulfuric acid and subjected to polymerization, was 115 ppm.

## Claims

1. A process for preparing a cationic polymer having a high molecular weight and a good water-solubility and wherein the content of water-insoluble gel is not more than 50 g/g, the process comprising: polymerizing or copolymerizing at least one monomer selected from the group consisting of a vinyl monomer represented by the general formula (1), a neutralized salt monomer represented by the general formula (2) and a quaternary ammonium salt monomer represented by the general formula (3); and a vinyl monomer represented by the general formula (4), in a ratio of the monomer (1), (2) or (3) to the monomer (4) of 100 : 0 to 5 : 95 by mole, the content of a divinyl monomer represented by the general formula (5) in said monomer (1), (2) or (3) being 100 ppm.

2. The process of Claim 1, wherein the content of the divinyl monomer is not more than 20 ppm and the content of water-insoluble gel is not more than 30 g/g.

3. A cationic polymer having a good water-solubility which has an average molecular weight of not less than $10^6$ and wherein the content of water-insoluble gel is not more than 50 g/g, said cationic polymer being prepared by polymerizing or copolymerizing at least one monomer selected from the group consisting of a vinyl monomer represented by the general formula (1), a neutralized salt monomer

represented by the general formula (2) and a quaternary ammonium salt monomer represented by the general formula (3); and a vinyl monomer represented by the general formula (4), in a ratio of the monomer (1), (2) or (3) to the monomer (4) of 100 : 0 to 5 : 95 by mole.

**4.** The cationic polymer of Claim 3, wherein the content of water-insoluble gel is not more than 30 g/g.

(1) 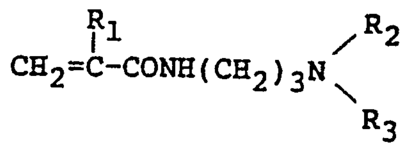

wherein $R_1$ represents hydrogen atom or methyl group, and $R_2$ and $R_3$ represent alkyl group having 1 to 3 carbon atoms.

(2) 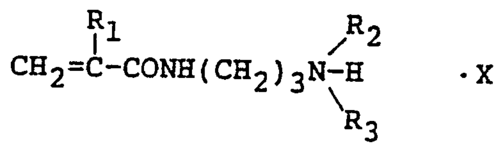

wherein $R_1$, $R_2$ and $R_3$ are the same as defined in the above (1), and X represents anionic counter ion.

(3) 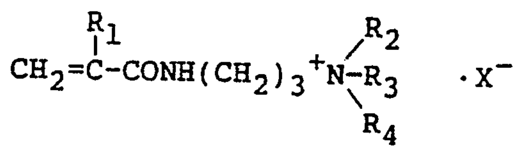

wherein $R_1$, $R_2$, $R_3$ and X are the same as defined in the above (2), and $R_4$ represents alkyl group having 1 to 4 carbon atoms or benzyl group.

(4) 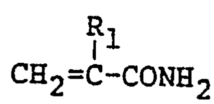

wherein $R_1$ represents hydrogen atom or methyl group.

(5) 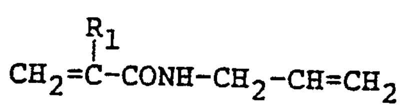

wherein $R_1$ represents hydrogen atom or methyl group.

Herein the average molecular weight Mw is obtained as a value calculated, according to the following formula, from the intrinsic viscosity [$\eta$] which is determined at 30 °C by means of an Ostwald viscometer, using solutions prepared by dissolving the polymer into IN sodium nitrate aqueous solution.

$$M = 1.4 \times 10^5 \times [\eta]^{3/2}$$

# INTERNATIONAL SEARCH REPORT

International Application No PCT/JP88/00269

**I. CLASSIFICATION OF SUBJECT MATTER** (if several classification symbols apply, indicate all) [7]

According to International Patent Classification (IPC) or to both National Classification and IPC

Int.Cl$^4$ C08F220/60, C08F220/56

**II. FIELDS SEARCHED**

Minimum Documentation Searched [8]

| Classification System | Classification Symbols |
|---|---|
| IPC | C08F220/54-C08F220/60 |

Documentation Searched other than Minimum Documentation to the Extent that such Documents are Included in the Fields Searched [9]

Jitsuyo Shinan Koho 1965 - 1987
Kokai Jitsuyo Shinan Koho 1965 - 1987

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 51-73093 (Sumitomo Chemical Co., Ltd.) 24 June 1976 (24. 06. 76) & JP, A, 52-9093 & DE, A, 2557451 & FR, A, 2295049 & US, A, 4075183 & US, A, 4138446 & GB, A, 1510689 & SU, A, 638283 | 1-4 |
| X | JP, A, 59-135212 (Nitto Chemical Industry Co., Ltd.) 3 August 1984 (03. 08. 84) & DE, A, 3402182 & GB, A, 2134531 & US, A, 4514551 | 1-4 |
| X | JP, A, 61-123610 (Kyoritsu Yuki Kogyo Kenkyusho Kabushiki Kaisha) 11 June 1986 (11. 06. 86) & EP, A, 183466 & JP, A, 62-20502 & JP, A, 62-20511 | 1-4 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| April 25, 1988 (25. 04. 88) | May 16, 1988 (16. 05. 88) |
| **International Searching Authority** | **Signature of Authorized Officer** |
| Japanese Patent Office | |

International Application No PCT/JP88/00269

**FURTHER INFORMATION CONTINUED FROM THE SECOND SHEET**

| | | |
|---|---|---|
| X | JP, A, 61-138607 (Kyoritsu Yuki Kogyo Kenkyusho Kabushiki Kaisha) 26 June 1986 (26. 06. 86) (Family: none) | 1-4 |
| X | JP, A, 54-102388 (Sanyo Chemical Industries, Ltd.) 11 August 1979 (11. 08. 79) & JP, A, 59-130397 | 3-4 |

**V. ☐ OBSERVATIONS WHERE CERTAIN CLAIMS WERE FOUND UNSEARCHABLE[10]**

This international search report has not been established in respect of certain claims under Article 17(2) (a) for the following reasons:

1. ☐ Claim numbers............because they relate to subject matter[12] not required to be searched by this Authority, namely:

2. ☐ Claim numbers............because they relate to parts of the international application that do not comply with the prescribed requirements to such an extent that no meaningful international search can be carried out[13], specifically:

**VI. ☐ OBSERVATIONS WHERE UNITY OF INVENTION IS LACKING[11]**

This International Searching Authority found multiple inventions in this international application as follows:

1. ☐ As all required additional search fees were timely paid by the applicant, this international search report covers all searchable claims of the international application.
2. ☐ As only some of the required additional search fees were timely paid by the applicant, this international search report covers only those claims of the international application for which fees were paid, specifically claims:
3. ☐ No required additional search fees were timely paid by the applicant. Consequently, this international search report is restricted to the invention first mentioned in the claims; it is covered by claim numbers:
4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.